# EUROPEAN PATENT APPLICATION

(11) **EP 4 697 292 A1**
(43) Date of publication of application: **18.02.2026**
(21) Application number: 24915205.9
(22) Date of filing: 27.12.2024
(51) Int. Cl.: G07C 9/00

(54) **BLUETOOTH DIGITAL KEY CREATION METHOD AND DEVICE, AND STORAGE MEDIUM**

(30) Priority: 02.01.2024 CN 202410004419
(71) Applicant: Chongqing Changan Automobile Co., Ltd., Chongqing 400023 (CN)
(72) Inventor: LONG, Heng, Chongqing 400023 (CN); LIU, Yang, Chongqing 400023 (CN)
(74) Representative: Elzaburu S.L.P.
(86) International application number: PCT/CN2024/143393
(87) International publication number: WO 2025/145991

(57) **Abstract**

The invention relates to a method and apparatus for creating a Bluetooth digital key, and a storage medium, which are used to solve the problem in the prior art that a vehicle-side Bluetooth chip cannot make multiple Bluetooth digital key protocols coexist while maintaining low power consumption. The method includes: in response to a first event in which a vehicle owner creates a first Bluetooth digital key between a first terminal and a vehicle, generating the first Bluetooth digital key and first Bluetooth pairing information that are based on a first protocol to complete creation of the first Bluetooth digital key between the first terminal and the vehicle; in response to a second event in which the vehicle owner creates a second Bluetooth digital key between a second terminal and the vehicle, generating the second Bluetooth digital key and second Bluetooth pairing information that are based on a second protocol to complete creation of the second Bluetooth digital key between the second terminal and the vehicle. A broadcast type supported by the operating system of the first terminal is different from a broadcast type supported by an operating system of the second terminal. A broadcast type supported by the first Bluetooth digital key is the same as a broadcast type supported by the second Bluetooth digital key.

## Description

The present application claims priority to Chinese patent application No. 202410004419.8, filed with the China National Intellectual Property Administration on January 02, 2024 and entitled "METHOD AND APPARATUS FOR CREATING BLUETOOTH DIGITAL KEY, AND STORAGE MEDIUM". The aforementioned application is hereby incorporated by reference in its entirety.

### TECHNICAL FIELD

The present application relates to the field of digital vehicle keys and, in particular, to a method and apparatus for creating Bluetooth digital key, and a storage medium.

### BACKGROUND

Digital vehicle keys are one of the important innovative applications for intelligent connected vehicles, and some vehicle manufacturers, terminal device vendors, and OEMs have already begun to develop digital vehicle key solutions.

Currently, the mainstream solutions on the market include CCC (Car Connectivity Consortium, Car Connectivity Consortium), ICCE (Intelligent Car Connectivity Industry Ecosystem Alliance, Intelligent Car Connectivity Industry Ecosystem Alliance), ICCOA (Intelligent Car Connectivity Open Alliance, Intelligent Car Connectivity Open Alliance), private protocols of OEMs (Original Equipment Manufacturers, Original Equipment Manufacturers) and so on. For different protocols, they have varying requirements for Bluetooth broadcasting. For example, the CCC, ICCOA, and ICCE protocols, and private protocols used by some terminal manufacturers require the transmission of RPA (resolvable private address, Resolvable Private Address) broadcasts, while other terminal manufacturers use self-customized protocols that require the transmission of static address broadcasts. Since vehicle-side Bluetooth chips need to be compatible with mainstream Bluetooth digital key protocols, it is necessary for the vehicle-side Bluetooth chips to support the simultaneous transmission of both types of broadcasts.

For the prior art, the problem is that, due to hardware limitations of Bluetooth chips, vehicle-side Bluetooth chips can only support the transmission of one type of broadcasts with low power consumption and cannot support the simultaneous transmission of both types of broadcasts with low power consumption. Therefore, they cannot achieve a function of multi-protocols coexistence. Although the vehicle-side Bluetooth chips can send these two types of broadcasts in a time-division switching manner, this will prevent the vehicle-side Bluetooth chips from entering a low-power mode, leading to increased power consumption of the entire vehicle.

For the vehicle side, it is necessary to meet the dual requirements of low power consumption and multi-protocol coexistence, to address diverse user demands for digital car keys.

### SUMMARY

The present invention provides a method and apparatus for creating a Bluetooth digital key, and a storage medium, which are used to solve the problem in the prior art that a vehicle-side Bluetooth chip cannot make multiple Bluetooth digital key protocols coexist while maintaining low power consumption.

The technical solution of the present invention is as follows.

In an aspect, the present invention provides a method for creating a Bluetooth digital key, which includes:
in response to a first event in which a vehicle owner creates a first Bluetooth digital key between a first terminal and a vehicle, generating the first Bluetooth digital key and first Bluetooth pairing information that are based on a first protocol to complete creation of the first Bluetooth digital key between the first terminal and the vehicle, where the first protocol refers to a public digital key protocol supported by both an operating system of the first terminal and a communication system of the vehicle;
in response to a second event in which the vehicle owner creates a second Bluetooth digital key between a second terminal and the vehicle, generating the second Bluetooth digital key and second Bluetooth pairing information that are based on a second protocol to complete creation of the second Bluetooth digital key between the second terminal and the vehicle, where the second protocol refers to a private digital key protocol specified by an automaker;
where a broadcast type supported by the operating system of the first terminal is different from a broadcast type supported by an operating system of the second terminal;
where a broadcast type supported by the first Bluetooth digital key is the same as a broadcast type supported by the second Bluetooth digital key.

Preferably, first occurrence time of the creation of the first Bluetooth digital key based on the first event is earlier than first occurrence time of the creation of the second Bluetooth digital key based on the second event.

Preferably, a step of in response to the first event in which the vehicle owner creates the first Bluetooth digital key between the first terminal and the vehicle, generating the first Bluetooth digital key and the first Bluetooth pairing information that are based on the first protocol to complete the creation of the first Bluetooth digital key between the first terminal and the vehicle, includes:
sending the generated first Bluetooth digital key and the generated first Bluetooth pairing information that are based on the first protocol to the first terminal and the vehicle, respectively, so that the first terminal and the vehicle perform validity verification on the first Bluetooth digital key;
when it is identified that both the first terminal and the vehicle have completed the validity verification of the first Bluetooth digital key, triggering the first terminal to store the first Bluetooth digital key and the first Bluetooth pairing information, and determining whether it is a first one of Bluetooth digital keys that is created for the vehicle for the first time;
if it is the first one of the Bluetooth digital keys that is created for the vehicle for the first time, triggering the vehicle to first perform digital key protocol and broadcast type switching according to the first protocol, and then store the first Bluetooth digital key and the first Bluetooth pairing information;
if it is not the first one of the Bluetooth digital keys that is created for the vehicle for the first time, and when the first protocol is the same as a broadcast type supported by the first one of the digital Bluetooth digital keys, triggering the vehicle to first perform digital key protocol switching according to the first protocol, and then store the first Bluetooth digital key and the first Bluetooth pairing information.

Preferably, a step of in response to the second event in which the vehicle owner creates the second Bluetooth digital key between the second terminal and the vehicle, generating the second Bluetooth digital key and the second Bluetooth pairing information that are based on the second protocol to complete the creation of the second Bluetooth digital key between the second terminal and the vehicle, includes:
sending the generated second Bluetooth digital key and the generated second Bluetooth pairing information that are based on the second protocol to the second terminal and the vehicle, respectively, so that the second terminal and the vehicle perform validity verification on the second Bluetooth digital key;
when it is identified that both the second terminal and the vehicle have completed the validity verification of the second Bluetooth digital key, triggering the second terminal to store the second Bluetooth digital key and the second Bluetooth pairing information; and triggering the vehicle to first perform digital key protocol switching according to the second protocol, then store the second Bluetooth digital key and the second Bluetooth pairing information.

Preferably, the method for creating a Bluetooth digital key further includes:
in response to a third event in which a friend of the vehicle owner creates a third Bluetooth digital key between a third terminal and the vehicle via a sharing link from a terminal of the vehicle owner;
if a broadcast type supported by an operating system of the third terminal is different from a broadcast type of a first one of Bluetooth digital keys of the vehicle, generating the third Bluetooth digital key and third Bluetooth pairing information that are based on the second protocol to complete creation of the third Bluetooth digital key between the third terminal and the vehicle;
if the broadcast type supported by the operating system of the third terminal is the same as the broadcast type of the first one of the Bluetooth digital keys of the vehicle, and a digital key protocol supported by the operating system of the third terminal is not supported by the communication system of the vehicle, then generating the third Bluetooth digital key and the third Bluetooth pairing information that are based on the second protocol to complete the creation of the third Bluetooth digital key between the third terminal and the vehicle;
if the broadcast type supported by the operating system of the third terminal is the same as the broadcast type of the first one of the Bluetooth digital keys of the vehicle, and the digital key protocol supported by the operating system of the third terminal is supported by the communication system of the vehicle, then generating a third Bluetooth digital key and third Bluetooth pairing information that are based on a third protocol to complete the creation of the third Bluetooth digital key between the third terminal and the vehicle, where the third protocol refers to a public digital key protocol supported by both the operating system of the third terminal and the communication system of the vehicle;
where a broadcast type supported by the third Bluetooth digital key is the same as the broadcast type supported by the first one of the Bluetooth digital keys;
where the terminal of the vehicle owner is the first terminal or the second terminal that has established an association with the vehicle on a server in advance.

Preferably, the method for creating a Bluetooth digital key further includes:
when a change of the vehicle owner is identified, deleting all Bluetooth digital keys created in the past.

In another aspect, the present invention further provides a method for creating a Bluetooth digital key, which includes:
in response to a first event in which a vehicle owner creates a first Bluetooth digital key between a first terminal and a vehicle, generating the first Bluetooth digital key and first Bluetooth pairing information that are based on a first protocol to complete creation of the first Bluetooth digital key between the first terminal and the vehicle, where the first protocol refers to a private digital key protocol specified by an automaker to which the vehicle belongs;
in response to a second event in which the vehicle owner creates a second Bluetooth digital key between a second terminal and the vehicle, generating the second Bluetooth digital key and second Bluetooth pairing information that are based on the first protocol to complete creation of the second Bluetooth digital key between the second terminal and the vehicle;
in response to a third event in which the vehicle owner creates a third Bluetooth digital key between a third terminal and the vehicle, generating the third Bluetooth digital key and the second Bluetooth pairing information that are based on a second protocol to complete creation of the third Bluetooth digital key between the third terminal and the vehicle, where the second protocol refers to a public digital key protocol supported by both an operating system of the third terminal and a communication system of the vehicle;
where a broadcast type supported by an operating system of the first terminal is different from a broadcast type supported by an operating system of the second terminal; and the operating system of the third terminal and the operating system of the first terminal support the same broadcast type but different digital key protocols;
where the first Bluetooth digital key, the second Bluetooth digital key and the third Bluetooth digital key support the same broadcast type.

Preferably, first occurrence time of the creation of the first Bluetooth digital key based on the first event is earlier than first occurrence time of the creation of the second Bluetooth digital key based on the second and first occurrence time of the creation of the third Bluetooth digital key based on the third event.

Preferably, a step of in response to the first event in which the vehicle owner creates the first Bluetooth digital key between the first terminal and the vehicle, generating the first Bluetooth digital key and the first Bluetooth pairing information that are based on the first protocol to complete the creation of the first Bluetooth digital key between the first terminal and the vehicle, includes:
sending the generated first Bluetooth digital key and the generated first Bluetooth pairing information that are based on the first protocol to the first terminal and the vehicle, respectively, so that the first terminal and the vehicle perform validity verification on the first Bluetooth digital key;
when it is identified that both the first terminal and the vehicle have completed the validity verification of the first Bluetooth digital key, triggering the first terminal to store the first Bluetooth digital key and the first Bluetooth pairing information, and triggering the vehicle to first perform digital key protocol and broadcast type switching according to the first protocol, and then store the first Bluetooth digital key and the first Bluetooth pairing information.

Preferably, a step of in response to the second event in which the vehicle owner creates the second Bluetooth digital key between the second terminal and the vehicle, generating the second Bluetooth digital key and the second Bluetooth pairing information that are based on the first protocol to complete the creation of the second Bluetooth digital key between the second terminal and the vehicle, includes:
sending the generated second Bluetooth digital key and the generated second Bluetooth pairing information that are based on the first protocol to the second terminal and the vehicle, respectively, so that the second terminal and the vehicle perform validity verification on the second Bluetooth digital key;
when it is identified that both the second terminal and the vehicle have completed the validity verification of the second Bluetooth digital key, triggering the second terminal to store the second Bluetooth digital key and the second Bluetooth pairing information; and triggering the vehicle to store the second Bluetooth digital key and the second Bluetooth pairing information.

Preferably, a step of in response to the third event in which the vehicle owner creates the third Bluetooth digital key between the third terminal and the vehicle, generating the third Bluetooth digital key and the second Bluetooth pairing information that are based on the second protocol to complete the creation of the third Bluetooth digital key between the third terminal and the vehicle, includes:
sending the generated third Bluetooth digital key and the generated third Bluetooth pairing information that are based on the second protocol to the third terminal and the vehicle, respectively, so that the third terminal and the vehicle perform validity verification on the third Bluetooth digital key;
when it is identified that both the third terminal and the vehicle have completed the validity verification of the third Bluetooth digital key, triggering the third terminal to store the third Bluetooth digital key and the third Bluetooth pairing information that are based on the second protocol; and triggering the vehicle to first perform digital key protocol switching according to a public protocol, then store the third Bluetooth digital key and the third Bluetooth pairing information that are based on the second protocol.

Preferably, the method for creating a Bluetooth digital key further includes:
in response to a fourth event in which a friend of the vehicle owner creates a fourth Bluetooth digital key between a fourth terminal and the vehicle via a sharing link from a terminal of the vehicle owner;
if a broadcast type supported by an operating system of the fourth terminal is different from a broadcast type of a first one of Bluetooth digital keys of the vehicle, generating the fourth Bluetooth digital key and fourth Bluetooth pairing information that are based on the first protocol to complete creation of the fourth Bluetooth digital key between the fourth terminal and the vehicle;
if the broadcast type supported by the operating system of the fourth terminal is the same as the broadcast type of the first one of the Bluetooth digital keys of the vehicle, and a digital key protocol supported by the operating system of the fourth terminal is not supported by the communication system of the vehicle, then generating the fourth Bluetooth digital key and the fourth Bluetooth pairing information that are based on the first protocol to complete the creation of the fourth Bluetooth digital key between the fourth terminal and the vehicle;
if the broadcast type supported by the operating system of the fourth terminal is the same as the broadcast type of the first one of the Bluetooth digital keys of the vehicle, and the digital key protocol supported by the operating system of the fourth terminal is supported by the communication system of the vehicle, then generating a fourth Bluetooth digital key and fourth Bluetooth pairing information that are based on a third protocol to complete the creation of the fourth Bluetooth digital key between the fourth terminal and the vehicle, where the third protocol refers to a public digital key protocol supported by both the operating system of the fourth terminal and the communication system of the vehicle;
where a broadcast type supported by the fourth Bluetooth digital key is the same as the broadcast type supported by the first one of the Bluetooth digital keys;
where the terminal of the vehicle owner is the first terminal, the second terminal or the third terminal that has established an association with the vehicle on a server in advance.

Preferably, the method for creating a Bluetooth digital key further includes:
when a change of the vehicle owner is identified, deleting all Bluetooth digital keys created in the past.

In another aspect, the present invention further provides an apparatus for creating a Bluetooth digital key, which including:
a first creating module, configured to, in response to a first event in which a vehicle owner creates a first Bluetooth digital key between a first terminal and a vehicle, generate the first Bluetooth digital key and first Bluetooth pairing information that are based on a first protocol to complete creation of the first Bluetooth digital key between the first terminal and the vehicle, where the first protocol refers to a public digital key protocol supported by both an operating system of the first terminal and a communication system of the vehicle;
a second creating module, configured to, in response to a second event in which the vehicle owner creates a second Bluetooth digital key between a second terminal and the vehicle, generate the second Bluetooth digital key and second Bluetooth pairing information that are based on a second protocol to complete creation of the second Bluetooth digital key between the second terminal and the vehicle, where the second protocol refers to a private digital key protocol specified by an automaker;
where a broadcast type supported by the operating system of the first terminal is different from a broadcast type supported by an operating system of the second terminal.

In another aspect, the present invention further provides an apparatus for creating a Bluetooth digital key, which including:
a first creating module, configured to, in response to a first event in which a vehicle owner creates a first Bluetooth digital key between a first terminal and a vehicle, generate the first Bluetooth digital key and first Bluetooth pairing information that are based on a first protocol to complete creation of the first Bluetooth digital key between the first terminal and the vehicle, where the first protocol refers to a private digital key protocol specified by an automaker to which the vehicle belongs;
a second creating module, configured to, in response to a second event in which the vehicle owner creates a second Bluetooth digital key between a second terminal and the vehicle, generate the second Bluetooth digital key and second Bluetooth pairing information that are based on the first protocol to complete creation of the second Bluetooth digital key between the second terminal and the vehicle;
a third creating module, configured to, in response to a third event in which the vehicle owner creates a third Bluetooth digital key between a third terminal and the vehicle, generate the third Bluetooth digital key and the second Bluetooth pairing information that are based on a second protocol to complete creation of the third Bluetooth digital key between the third terminal and the vehicle, where the second protocol refers to a public digital key protocol supported by both an operating system of the third terminal and a communication system of the vehicle;
where a broadcast type supported by an operating system of the first terminal is different from a broadcast type supported by an operating system of the second terminal; and the operating system of the third terminal and the operating system of the first terminal support the same broadcast type but different digital key protocols;
where the first Bluetooth digital key, the second Bluetooth digital key and the third Bluetooth digital key support the same broadcast type.

In another aspect, the present invention further provides an apparatus for creating a Bluetooth digital key, which including:
a processor;
a memory, configured to store an instruction executable by the processor;
where the processor is configured to perform the steps of the method for creating the Bluetooth digital key as described above.

In another aspect, the present invention further provides a computer-readable storage medium storing a computer program instruction thereon, where when the program instruction is executed by a processor, the steps of the method for creating the Bluetooth digital key as described above are implemented.

The beneficial effects of the present invention are as follows:
when the vehicle owner uses the first terminal to create a Bluetooth digital key for controlling the vehicle, the server generates the first Bluetooth digital key between the first terminal and the vehicle based on the public digital key protocol supported by both the operating system of the first terminal and the communication system of the vehicle. After the first Bluetooth digital key between the first terminal and the vehicle is successfully created, the first terminal performs Bluetooth-based control of the vehicle through its own operating system. When the vehicle owner uses the second terminal to create a Bluetooth digital key for controlling the vehicle, the server generates the second Bluetooth digital key between the second terminal and the vehicle based on the private digital key protocol specified by the automaker to which the vehicle belongs. After the second Bluetooth digital key between the second terminal and the vehicle is successfully created, the second terminal performs the Bluetooth-based control of the vehicle through an automaker-installed APP. For the vehicle-side Bluetooth chip, since the broadcast type sent to the first terminal and the second terminal is the same, there is no need to send two different types of broadcasts in a time-division switching manner as in the prior art. This allows the vehicle-side Bluetooth chip both to support communication with various terminals employing different Bluetooth digital key protocols, and to meet the low-power requirement of the Bluetooth chip.

### BRIEF DESCRIPTION OF DRAWINGS

FIG. 1 is a system block diagram for implementing a method for creating a Bluetooth digital key in various embodiments of the present invention.
FIG. 2 is a flowchart of a method for creating a Bluetooth digital key by a vehicle owner in a first embodiment of the present invention.
FIG. 3 is a flowchart of a method for creating a Bluetooth digital key based on the vehicle owner's sharing in a first embodiment of the present invention.
FIG. 4 is a flowchart of a method for creating a Bluetooth digital key in a first embodiment of the present invention.
FIG. 5 is a flowchart of a method for creating a Bluetooth digital key in a second embodiment of the present invention.

### DESCRIPTION OF EMBODIMENTS

It should be noted that, in the case of no conflict, the embodiments of the present invention and the features in the embodiments may be combined with each other.

The present invention will be described in detail below with reference to the accompanying drawings and in conjunction with the embodiments.

Since different terminal manufacturers support different digital key protocols, and different digital key protocols may require the vehicle side to send different types of broadcasts (RPA addresses or static addresses), when the vehicle owner expects to have multiple Bluetooth digital keys or shares the vehicle key with friends, there will be a problem of mismatched broadcast types. In a first embodiment of the present invention, it is expected to make a judgment on the server side. If the broadcast type supported by the vehicle key to be provisioned or shared is the same as the broadcast type supported by the terminal of the first one of Bluetooth digital keys of the vehicle owner, the Bluetooth digital key corresponding to a public digital key protocol will be directly generated based on a brand and a model of the terminal; if not, the Bluetooth digital key corresponding to a private digital key protocol will be used.

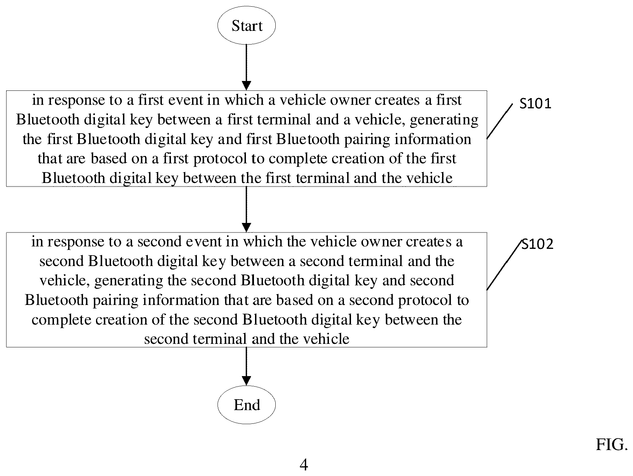

Referring to FIG. 4, in the first embodiment of the present invention, a method for creating a Bluetooth digital key is provided, which includes:
S101, in response to a first event in which a vehicle owner creates a first Bluetooth digital key between a first terminal and a vehicle, generating the first Bluetooth digital key and first Bluetooth pairing information that are based on a first protocol to complete creation of the first Bluetooth digital key between the first terminal and the vehicle. The first protocol refers to a public digital key protocol supported by both an operating system of the first terminal and a communication system of the vehicle.

S102, in response to a second event in which the vehicle owner creates a second Bluetooth digital key between a second terminal and the vehicle, generating the second Bluetooth digital key and second Bluetooth pairing information that are based on a second protocol to complete creation of the second Bluetooth digital key between the second terminal and the vehicle. The second protocol refers to a private digital key protocol specified by an automaker to which the vehicle belongs.

A broadcast type supported by the operating system of the first terminal is different from a broadcast type supported by an operating system of the second terminal.

A broadcast type supported by the first Bluetooth digital key is the same as a broadcast type supported by the second Bluetooth digital key.

A user establishes an association with the vehicle on the server in advance via the first terminal or the second terminal. Once this association is established, the server will identify the user who uses the first terminal or the second terminal as the vehicle owner. When the vehicle owner logs into an account on the first terminal and the second terminal to connect to the server, a Bluetooth digital key management module of the server can immediately identify information of the vehicle associated with the first terminal and the second terminal.

The first event is triggered by the vehicle owner through a native application (Native APP) or an automaker application (Automaker APP) on the first terminal. After a secure connection is established between the first terminal and the server, a key request provisioning command is sent to the server, that is, the first event is triggered.

In the first embodiment of the present invention, the key request provisioning command sent by the first terminal carries information about the brand and the model of the first terminal. This allows the server to identify the digital key protocol supported by the operating system of the first terminal based on the information about the brand and the model of the first terminal, and further identify the broadcast type supported by the operating system of the first terminal. Alternatively, the key request provisioning command sent by the first terminal directly carries the digital key protocol supported by the operating system of the first terminal, enabling the server to identify the broadcast type supported by the operating system of the first terminal.

The second event is triggered by the vehicle owner through a native application (Native APP) or an automaker application (Automaker APP) on the second terminal. After a secure connection is established between the second terminal and the server, a key request provisioning command is sent to the server, that is, the second event is triggered.

In the first embodiment of the present invention, the key request provisioning command sent by the second terminal carries information about the brand and the model of the second terminal. This allows the server to identify the digital key protocol supported by the operating system of the second terminal based on the information about the brand and the model of the second terminal, and further identify the broadcast type supported by the operating system of the second terminal. Alternatively, the key request provisioning command sent by the second terminal directly carries the digital key protocol supported by the operating system of the second terminal, enabling the server to identify the broadcast type supported by the operating system of the second terminal.

When the digital key protocol supported by the operating system of the first terminal is the CCC protocol, ICCOA protocol, or any similar protocol that supports the RPA broadcast type, the digital key protocol supported by the operating system of the second terminal shall be a private protocol or any similar protocol that supports a static address broadcast type. When the digital key protocol supported by the operating system of the second terminal is the CCC protocol, ICCOA protocol, or any similar protocol that supports the resolvable private address broadcast type, the digital key protocol supported by the operating system of the first terminal shall be a custom protocol or any similar protocol that supports the static address broadcast type. That is, the broadcast type supported by the operating system of the first terminal is different from the broadcast type supported by the operating system of the second terminal.

In the first embodiment of the present invention, the control functions that the terminal can perform on the vehicle via Bluetooth include but are not limited to: unlocking, locking, starting, shutting down, window control, sunroof control, trunk control, air conditioning control, sunshade control, seat control, ambient light control, charging port or fuel tank cap control, front compartment door or rear compartment door control, vehicle search, in-vehicle multimedia control, remote parking, and so on.

In the first embodiment of the present invention, first occurrence time of the creation of the first Bluetooth digital key based on the first event is earlier than first occurrence time of the creation of the second Bluetooth digital key based on the second event. At this point, when the vehicle owner first creates the first one of Bluetooth digital keys between the terminal and the vehicle, the Bluetooth digital key is created based on the public digital key protocol supported by both the operating system of the terminal and the communication system of the vehicle. In this case, when using the first one of the Bluetooth digital keys to perform a Bluetooth-based control of the vehicle, the Bluetooth-based control of the vehicle is performed through a native application (Native APP) of the operating system of the terminal. For example, it is supposed that the first terminal is a certain brand Phone, after identification, the server determines that the digital key protocol supported by the operating system of this first terminal is the CCC protocol (which is also supported by the communication system of the vehicle), and the broadcast type supported by the operating system of this first terminal is RPA broadcast. The second terminal is an unknown brand Phone, after identification, the server determines that the digital key protocol supported by the operating system of the first terminal is a custom protocol of this brand Phone, and the broadcast type supported by the operating system of this first terminal is the static address broadcast. When the first terminal first creates the first one of the Bluetooth digital keys with the vehicle, the successfully created first Bluetooth digital key between the first terminal and the vehicle (being the first one of the Bluetooth digital keys of the vehicle) supports the CCC protocol and the RPA broadcast; then, when the second terminal creates a second Bluetooth digital key with the vehicle, the successfully created second Bluetooth digital key between the second terminal and the vehicle (being the second one of the Bluetooth digital keys of the vehicle) supports the private protocol specified by the automaker and the aforementioned RPA broadcast. In conclusion, once the very first Bluetooth digital key has been created between a certain terminal and the vehicle, the broadcast type supported by the Bluetooth digital key(s) subsequently created between other terminal(s) and the vehicle is always the same as the broadcast type supported by the very first Bluetooth digital key (here is the RPA broadcast), but the supported digital key protocols may not be the same.

In the aforementioned first embodiment of the present invention, the broadcast type supported by the created first Bluetooth digital key and the broadcast type supported by the created second Bluetooth digital key are the same. This enables the vehicle-side Bluetooth chip to continuously send outward broadcasts in only one broadcast type, without the need for time-division switching of broadcasts as in the background art.

To implement the creation of the Bluetooth digital key between the first terminal and the vehicle and the creation of the Bluetooth digital key between the second terminal and the vehicle, in the following, the scenario where the vehicle owner creates the Bluetooth digital key will be described in detail by way of example.

The vehicle owner initiates, through a native application (Native APP) or an automaker application (Automaker APP) on Phone A (the first terminal), a key request provisioning command 1 for Vehicle a to the server. The key request provisioning command 1 carries the brand and the model of Phone A. Based on this key request provisioning command 1, the server can identify that the digital key protocol supported by the operating system of Phone A is the CCC protocol (which is also supported by the communication system of the vehicle), and the broadcast type supported by the operating system of Phone A is RPA broadcast.

The server determines whether it is the first one of Bluetooth digital keys for Vehicle a according to the key request provisioning command 1.

If it is the first one of the Bluetooth digital keys for Vehicle a, the server generates a Bluetooth digital key 1 and Bluetooth pairing information 1 (including a broadcast key and an IRK (Identity Resolving Key, Identity Resolving Key)) based on the CCC protocol and RPA broadcast supported by both the operating system of Phone A and the communication system of the vehicle.

The server sends the Bluetooth digital key 1 and the Bluetooth pairing information 1 to Phone A, respectively, and sends the Bluetooth digital key 1 and the Bluetooth pairing information 1 that are encrypted with a MAC algorithm (Message Authentication Code, Message Authentication Code) to Vehicle a. To ensure functional safety of the vehicle and prevent man-in-the-middle attacks, it is necessary to use the MAC algorithm to encrypt data when the vehicle side communicates with the server.

The DKF (Digital Key Framework, Digital Key Framework) module in Phone A performs validity verification on the Bluetooth digital key 1, and notifies the server of a phone-side verification result after the verification is completed. The specific process of performing the validity verification on the Bluetooth digital key 1 by the DKF module of Phone A is implemented using existing technologies.

After Vehicle a performs MAC algorithm verification on the received data, the SDK (Software Development Kit, Software Development Kit) module of Vehicle a performs validity verification on the Bluetooth digital key 1, and notifies the server of a vehicle-side verification result after the verification is completed. The specific process of performing the validity verification on the Bluetooth digital key 1 by the SDK module of Vehicle a is implemented using existing technologies.

Once the server determines that both Vehicle a and Phone A have successfully verified the Bluetooth digital key 1, it sends a trigger message to Phone A. The automaker APP in Phone A prompts that the provisioning of the vehicle key is successful, stores the Bluetooth Pairing Information 1 in a BLE (Bluetooth Low Energy, Bluetooth Low Energy) master module; meanwhile, the server stores the Bluetooth digital key 1 in either an SE (Security Element, Security Element) module or a phone wallet of Phone A.

Meanwhile, the server also determines that the Bluetooth digital key 1 is the first one of Bluetooth digital keys for Vehicle a, and sends a control command for Bluetooth broadcast switching to Vehicle a, said command being encrypted with the MAC algorithm. After Vehicle a decrypts the Bluetooth broadcast switching command using the MAC algorithm, the SDK module of Vehicle a performs digital key protocol switching (including switching of broadcasting types) according to the digital key protocol supported by Phone A and carried in the Bluetooth broadcast switching command. After Vehicle a performs the digital key protocol switching based on the digital key protocol supported by Phone A, the SDK module of Vehicle a stores the Bluetooth pairing information 1 to the BLE slave module and stores the Bluetooth digital key 1 to the SE module of the vehicle.

In addition, if the server determines that not both Vehicle a and Phone A have successfully verified the Bluetooth digital key 1, it triggers the automaker APP in Phone A to prompt that the provisioning of the vehicle key fails.

Thus, through the above steps, the creation of the first one of the Bluetooth digital keys (corresponding to the aforementioned Bluetooth digital key 1) between Phone A and Vehicle a is achieved. The native application (Native APP) in Phone A can use the Bluetooth digital key 1 to call the BLE master module to perform Bluetooth communication with the BLE slave module of Vehicle a. A vehicle control module of Vehicle a receives, through the SDK module, Bluetooth-based control commands transmitted by Phone A, thereby enabling the control of Vehicle A.

When the vehicle owner uses Phone B, which supports the same broadcasting type as Phone A but a different digital key protocol from Phone A (e.g., a certain brand phone; in this case, since Phone B has the same broadcast type as Phone A, it is still referred to as the first terminal), to create a digital Bluetooth digital key 2 with Vehicle a, the processing procedure among the server, Vehicle a, and Phone B is almost identical to the creation process of the aforementioned Bluetooth digital key 1. The differences are as follows: 1) the created Bluetooth digital key 2 and Bluetooth pairing information 2 are generated based on a common digital key protocol (in this case, the ICCOA protocol) supported by both the operating system of Phone B and the communication system of the vehicle, while the supported broadcasting type is the same as the broadcasting type supported by Phone A; 2) after it determines that both Vehicle a and Phone B have successfully verified the Bluetooth digital key 2, the server determines that the Bluetooth digital key 2 is not the first one of the Bluetooth digital keys for Vehicle a, and triggers Vehicle a to perform protocol switching according to the digital key protocol supported by the operating system of Phone B (without changing the broadcasting type). Vehicle a then stores the Bluetooth pairing information 2 and stores the Bluetooth digital key 2 to the SE module. The native application (Native APP) in Phone B can use the Bluetooth digital key 2 to call the BLE master module to perform Bluetooth communication with the BLE slave module of Vehicle a. The vehicle control module of Vehicle a receives, through the SDK module, Bluetooth-based control commands transmitted by Phone B, thereby enabling the control of Vehicle a.

That is, the aforementioned Phone A and Phone B jointly execute: sending the generated first Bluetooth digital key and the generated first Bluetooth pairing information that are based on the first protocol to the first terminal and the vehicle, so that the first terminal and the vehicle perform validity verification on the first Bluetooth digital key; when it is identified that both the first terminal and the vehicle have completed the validity verification of the first Bluetooth digital key, triggering the first terminal to store the first Bluetooth digital key and the first Bluetooth pairing information, and determining whether it is the first one of the Bluetooth digital keys that is created for the vehicle for the first time; if it is the first one of the Bluetooth digital keys that is created for the vehicle for the first time, triggering the vehicle to first perform digital key protocol and broadcast type switching according to the first protocol, and then store the first Bluetooth digital key and the first Bluetooth pairing information; if it is not the first one of the Bluetooth digital keys that is created for the vehicle for the first time, and the first protocol is the same as a broadcast type supported by the first one of the digital Bluetooth digital keys, then triggering the vehicle to first perform digital key protocol switching according to the first protocol, and store the first Bluetooth digital key and the first Bluetooth pairing information.

When the vehicle owner uses Phone C, which supports a different broadcast type and a different digital key protocol than the aforementioned Phone A (e.g., an unknown brand phone; the supported broadcast type by Phone C is a static address broadcast, and since the broadcast type supported by Phone C is different from the broadcast type supported by Phone A, Phone C is referred to as the second terminal), to create a digital Bluetooth digital key 2 with Vehicle a, the processing procedure among the server, Vehicle a, and Phone C is almost identical to the aforementioned creation process of the Bluetooth digital key 1. The differences are as follows: 1) the Bluetooth digital key 3 and Bluetooth pairing information 3 generated by the server are created based on the private protocol specified by the automaker, while the supported broadcast type is the same as the broadcast type supported by Phone A; 2) after it determines that both Vehicle a and Phone C have successfully verified the Bluetooth digital key 3, the server determines that the Bluetooth digital key 3 is not the first one of the Bluetooth digital keys for Vehicle a, and triggers Vehicle a to perform protocol switching according to the private protocol (without changing the broadcasting type). Vehicle a then stores the Bluetooth pairing information 3 and stores the Bluetooth digital key 3 in the SE module. The automaker APP in Phone C can use the Bluetooth digital key 3 to call the BLE master module to perform Bluetooth communication with the BLE slave module of Vehicle a. The vehicle control module of Vehicle a receives, through the SDK module, the Bluetooth-based control commands transmitted by Phone C, thereby enabling the control of Vehicle a. That is, the following operations are executed at this time: sending the generated second Bluetooth digital key and the generated second Bluetooth pairing information that are based on the second protocol to the second terminal and the vehicle, so that the second terminal and the vehicle perform validity verification on the second Bluetooth digital key; when it is identified that both the second terminal and the vehicle have completed the validity verification of the second Bluetooth digital key, triggering the second terminal to store the second Bluetooth digital key and the second Bluetooth pairing information; and triggering the vehicle to first perform digital key protocol switching according to the second protocol, then store the second Bluetooth digital key and the second Bluetooth pairing information.

Thus, based on the above process, a creation progression from the first one of the Bluetooth digital keys to additional Bluetooth digital keys for Vehicle a is achieved. For the Bluetooth chip of Vehicle a, when it sends out broadcasts, it always sends broadcasts as RPA broadcasts, so it can remain in low-power operation while enabling Bluetooth communication with multi-brand phones that support different digital key protocols.

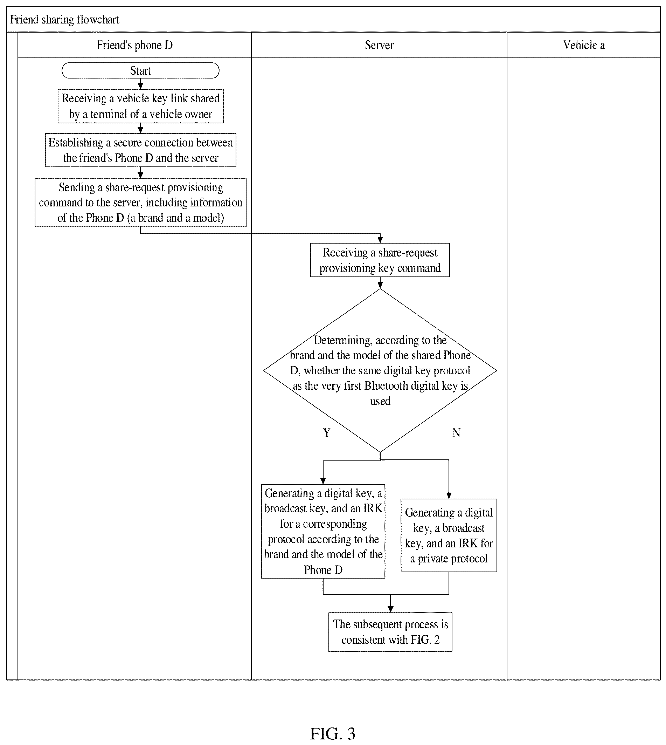

In the first embodiment of the present invention, with reference to FIG. 3, the vehicle owner can also share a vehicle key link from a terminal of the vehicle owner (which can be the aforementioned first terminal or second terminal) to a terminal of his friend (which is referred to as the third terminal in the first embodiment of the present invention), so that a Bluetooth digital key is created between the third terminal and the vehicle, enabling the vehicle owner's friend to control the vehicle via the third terminal. Taking the vehicle owner sharing the vehicle key link from the aforementioned Phone A to his friend's Phone D (i.e., the aforementioned third terminal) as an example: after Phone D receives the vehicle key link, the friend clicks on the vehicle key link to establish a secure connection between Phone D and the server, at this point, the server establishes an association between Phone D and Vehicle a. Then, the friend sends a share-request provisioning command (which includes the brand and the model of Phone D) to the server via Phone D. After receiving the share-request provisioning command from Phone D, the server performs the creation process of the Bluetooth digital key 4 between Phone D and Vehicle a. The specific creation process follows the same steps as the creation process of the Bluetooth digital key between Vehicle a and either Phone B or Phone C, according to whether the broadcast type of the very first Bluetooth digital key of Vehicle a and the broadcast type of Phone D (here referring to the Bluetooth digital key 1 between Phone A and Vehicle a) is the same. The broadcast type supported by the created Bluetooth digital key 4 is the same as the broadcast type supported by the very first Bluetooth digital key. That is, the following steps are executed:
Step S103, in response to a third event in which a friend of the vehicle owner creates a fourth Bluetooth digital key between a third terminal and the vehicle via a sharing link from a terminal of the vehicle owner;
Step S104, if a broadcast type supported by an operating system of the third terminal is different from a broadcast type of a first one of Bluetooth digital keys of the vehicle, generating the third Bluetooth digital key and third Bluetooth pairing information that are based on the second protocol to complete creation of the third Bluetooth digital key between the third terminal and the vehicle;
Step S105, if the broadcast type supported by the operating system of the third terminal is the same as the broadcast type of the first one of the Bluetooth digital keys of the vehicle, and a digital key protocol supported by the operating system of the third terminal is not supported by the communication system of the vehicle, then generating the third Bluetooth digital key and the third Bluetooth pairing information that are based on the second protocol to complete the creation of the third Bluetooth digital key between the third terminal and the vehicle;
Step S105, if the broadcast type supported by the operating system of the third terminal is the same as the broadcast type of the first one of the Bluetooth digital keys of the vehicle, and the digital key protocol supported by the operating system of the third terminal is supported by the communication system of the vehicle, then generating a third Bluetooth digital key and third Bluetooth pairing information that are based on a third protocol to complete the creation of the third Bluetooth digital key between the third terminal and the vehicle, where the third protocol refers to a public digital key protocol supported by both the operating system of the third terminal and the communication system of the vehicle; the broadcast type supported by the third Bluetooth digital key is the same as the broadcast type supported by the first one of the Bluetooth digital keys;
the terminal of the vehicle owner is the first terminal or the second terminal that has established an association with the vehicle on the server in advance.

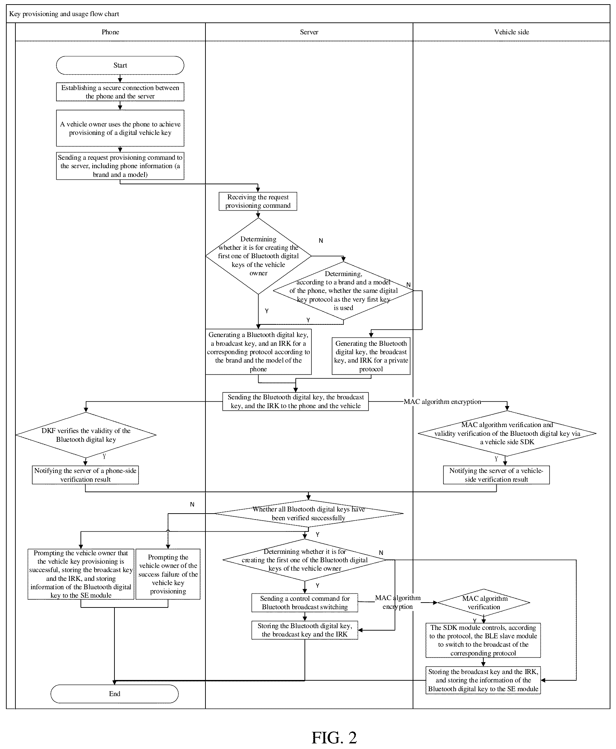

In summary, the aforementioned first embodiment of the present invention implements the following functions and scenarios:
I. Vehicle Owner Key Provisioning Function, as shown in FIG. 2, it includes the following steps:
   1) The vehicle owner uses a phone to achieve provisioning of a Bluetooth digital key. After a secure connection is established between the phone and the server, a key request provisioning command is sent to the server, the command includes information about the brand and the model of the phone;
   2) after receiving the key request provisioning command, the server determines whether the current request is for creating the first one of Bluetooth digital keys of the vehicle owner; if yes, the server generates a Bluetooth digital key, a broadcast key, and an IRK for a corresponding protocol based on the brand and the model of the phone; if it is not the very first key created by the vehicle owner, the server determines whether the phone newly applying for a key uses the same protocol as the very first key. If yes, the server performs the same subsequent operations as those for the very first key; if not, the server generates a digital key, a broadcast key, and an IRK for a private protocol for the newly applied key;
   3) the server sends the relevant information generated in step 2) to the phone and the vehicle, respectively;
   4) the phone and the vehicle verify the validity of the Bluetooth digital key, respectively, and send verification results to the server;
   5) if the server side determines that the vehicle key passes the verification at both the phone and the vehicle, it notifies the phone side that the key is created successfully; if it is a scenario where the first one of the Bluetooth digital keys is being created, the server side will send a control command for Bluetooth broadcast switching to the vehicle side, after receiving the command, the vehicle side switches to a broadcast of a corresponding protocol type, finally, the vehicle side, the server side, and the phone store the corresponding vehicle key information respectively; if the verification at one or both of the phone side and the vehicle side fails, the server notifies the phone that the key provisioning has failed and discards the key-related information.
   6) A single vehicle allows multiple owner keys to be created, when creating subsequent keys:
   7) the user uses the phone to achieve provisioning of the second one of the Bluetooth digital keys and subsequent Bluetooth digital keys. The process is shown in FIG. 2, the server side determines whether the same protocol as the very first vehicle key of the vehicle owner is used, and reference may be made to steps 2)-5) in I for the subsequent process.
II. Friend Sharing Key Function, as shown in FIG. 3, when the vehicle owner shares a key with a friend, the process includes the following steps:
   1) the vehicle owner shares the digital Bluetooth digital key, after the friend receives the shared vehicle key link, a secure connection is established between the friend's phone and the server, and then a share-request provisioning key command is sent to the server;
   2) After receiving the share-request provisioning key command, the server determines whether the same protocol as the very first Bluetooth digital key of the vehicle owner is used, according to the brand and model of the friend's phone. If yes, it generates a Bluetooth digital key, a broadcast key, and an IRK for a corresponding protocol based on the brand and the model of the phone. If not, it generates a Bluetooth digital key, a broadcast key, and an IRK of a private protocol for the newly applied key;
   3) the subsequent process involving the phone side and the vehicle side is the same as that shown in FIG. 2, except that the vehicle owner's phone is replaced with the friend's phone.
III. Vehicle Owner Change Function, when the vehicle owner is changed, the process includes the following step:
   1) when the vehicle owner is changed, after a secure connection is established between the new vehicle owner's phone and the server, it is determined that the scenario is a vehicle owner change scenario. All the vehicle owner keys and shared keys of the original vehicle are deleted, and the new vehicle owner follows a key provisioning and usage flow chart (see FIG. 2) to achieve provisioning of a key.

Based on the creation method of the aforementioned first embodiment, when the vehicle owner uses the first terminal to create the Bluetooth digital key for controlling the vehicle, the server generates the first Bluetooth digital key between the first terminal and the vehicle based on the public digital key protocol supported by the operating system of the first terminal and the communication system of the vehicle. After the first Bluetooth digital key between the first terminal and the vehicle is successfully created, the first terminal performs the Bluetooth-based control of the vehicle through its own operating system. When the vehicle owner uses the second terminal to create the Bluetooth digital key for controlling the vehicle, the server generates the second Bluetooth digital key between the second terminal and the vehicle based on the private digital key protocol specified by the automaker to which the vehicle belongs. After the second Bluetooth digital key between the second terminal and the vehicle is successfully created, the second terminal performs the Bluetooth-based control of the vehicle through the automaker-installed APP. For the vehicle-side Bluetooth chip, since the broadcast type sent to the first terminal and the second terminal is the same, there is no need to send two different types of broadcasts in a time-division switching manner as in the prior art. This allows the vehicle-side Bluetooth chip both to support communication with various terminals employing different Bluetooth digital key protocols, and to meet the low-power requirement of the Bluetooth chip.

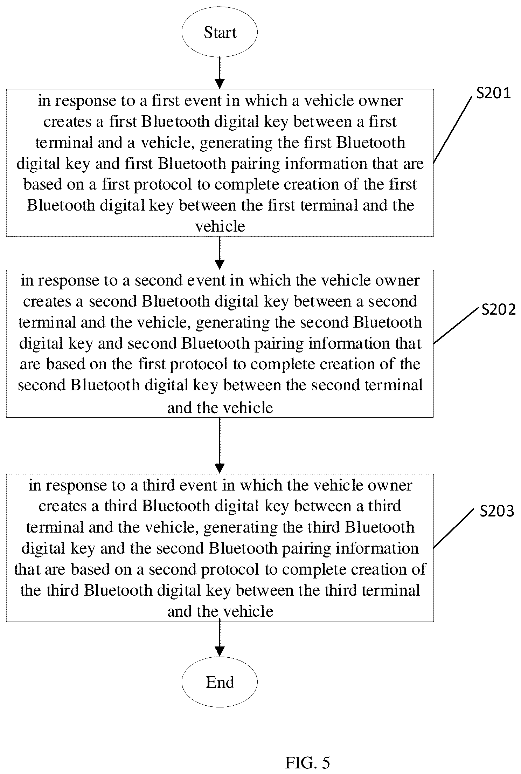

It is considered that the terminal operating systems used by some users do not support these mainstream digital key protocols, but instead support non-mainstream digital key protocols customized by corresponding terminal manufacturers. Since the vehicle-side Bluetooth chip cannot be adapted to these non-mainstream digital key protocols, when creating the very first Bluetooth digital key between such terminals and the vehicle, it is impossible to create the digital key based on the customized protocol supported by the operating system of the brand phone. To solve the aforementioned problem, as shown in FIG. 5, in the second embodiment of the present invention, it also provides another method for creating a Bluetooth digital key applied to the server, which includes the following steps:
S201, in response to a first event in which a vehicle owner creates a first Bluetooth digital key between a first terminal and a vehicle, generating the first Bluetooth digital key and first Bluetooth pairing information that are based on a first protocol to complete creation of the first Bluetooth digital key between the first terminal and the vehicle, where the first protocol refers to a private digital key protocol specified by an automaker to which the vehicle belongs;
S202, in response to a second event in which the vehicle owner creates a second Bluetooth digital key between a second terminal and the vehicle, generating the second Bluetooth digital key and second Bluetooth pairing information that are based on the first protocol to complete creation of the second Bluetooth digital key between the second terminal and the vehicle;
S203, in response to a third event in which the vehicle owner creates a third Bluetooth digital key between a third terminal and the vehicle, generating the third Bluetooth digital key and the second Bluetooth pairing information that are based on a second protocol to complete creation of the third Bluetooth digital key between the third terminal and the vehicle, where the second protocol refers to a public digital key protocol supported by both an operating system of the third terminal and a communication system of the vehicle;
where a broadcast type supported by an operating system of the first terminal is different from a broadcast type supported by an operating system of the second terminal; and the operating system of the third terminal and the operating system of the first terminal support the same broadcast type but different digital key protocols;
where the first Bluetooth digital key, the second Bluetooth digital key and the third Bluetooth digital key support the same broadcast type.

In the second embodiment, first occurrence time of the creation of the first Bluetooth digital key based on the first event is earlier than first occurrence time of the creation of the second Bluetooth digital key based on the second event and first occurrence time of the creation of the third Bluetooth digital key based on the second event. At this point, when the vehicle owner first creates the first one of Bluetooth digital keys between the terminal and the vehicle, the Bluetooth digital key is created based on the private protocol. In this case, when using the first one of the Bluetooth digital keys to perform Bluetooth-based control of the vehicle, the Bluetooth-based control of the vehicle is performed through an automaker application (Automaker APP) of the operating system of the terminal.

For example, it is supposed that the first terminal is an unknown brand phone A, after identification, the server determines that the digital key protocol supported by the operating system of the first terminal is a non-mainstream digital key protocol self-defined by the brand phone (the communication system of the vehicle does not support the non-mainstream digital key protocol), and the supported broadcast type is the static address broadcast. The second terminal is a certain phone B, after identification, the server determines that the digital key protocol supported by the operating system of the first terminal is the ICCOA protocol, and the supported broadcast type is the RPA broadcast. The third terminal is a phone specially customized by a certain company according to requirements of the automaker. After identification, the server determines that the digital key protocol supported by the operating system of the first terminal is the ICCE protocol, but the supported broadcast type is the static address broadcast. When the first terminal first creates the first one of the Bluetooth digital keys with the vehicle, since the vehicle-side Bluetooth chip does not support the custom digital key protocol supported by the operating system of the unknown brand phone A, the successfully created first Bluetooth digital key between the first terminal and the vehicle (being the first one of the Bluetooth digital keys of the vehicle) can only support the private protocol and the static address broadcast (the broadcast type can be customized and takes priority in responding to the broadcast type supported by the first terminal). When the second terminal subsequently creates the second Bluetooth digital key with the vehicle, since the broadcast types supported by the second terminal and the broadcast types supported by the first terminal are different, the successfully created second Bluetooth digital key between the second terminal and the vehicle (being the second one of the Bluetooth digital keys of the vehicle) can only support the private protocol specified by the automaker and the aforementioned static address broadcast. When the third terminal subsequently creates the third Bluetooth digital key with the vehicle, since the broadcast type supported by the third terminal is the same as the broadcast type supported by the first terminal and the vehicle-side Bluetooth chip supports the ICCE protocol, the successfully created third Bluetooth digital key (being the third one of the Bluetooth digital keys of the vehicle) supports the ICCE protocol and static address broadcast supported by the operating system of the specially customized phone.

To implement the creation of Bluetooth digital keys between the vehicle and the first to third terminals, in the following, the scenario where the vehicle owner creates the Bluetooth digital keys will be described in detail in the second embodiment by way of example.

The vehicle owner initiates, through a native application (Native APP) or an automaker application (Automaker APP) on Phone A (the first terminal), a key request provisioning command 1 for Vehicle a to the server. The key request provisioning command 1 carries the brand and the model of Phone A (the unknown brand phone). Based on this key request provisioning command 1, the server can identify that the digital key protocol supported by the operating system of Phone A is a custom digital key protocol that is not supported by the operating system of the vehicle, and the broadcast type supported by the operating system of Phone A is RPA broadcast.

The server determines whether it is the first one of Bluetooth digital keys for Vehicle a according to the key request provisioning command 1.

If it is the first one of the Bluetooth digital keys for Vehicle a, since the vehicle Bluetooth chip does not support the custom digital key protocol of the Phone A's brand, the server generates a Bluetooth digital key 1 and Bluetooth pairing information 1 (including a broadcast key and an IRK) based on the private protocol self-fixed by the automaker and the RPA broadcast.

The server sends the Bluetooth digital key 1 and the Bluetooth pairing information 1 to Phone A, respectively, and sends the Bluetooth digital key 1 and the Bluetooth pairing information 1 that are encrypted with a MAC algorithm to Vehicle a. To ensure functional safety of the vehicle and prevent man-in-the-middle attacks, it is necessary to use the MAC algorithm to encrypt data when the vehicle side communicates with the server.

The DKF module in Phone A performs validity verification on the Bluetooth digital key 1, and notifies the server of a phone-side verification result after the verification is completed. The specific process of performing the validity verification on the Bluetooth digital key 1 by the DKF module of Phone A is implemented using existing technologies.

After Vehicle a performs MAC algorithm verification on the received data, the SDK module of Vehicle a performs validity verification on the Bluetooth digital key 1, and notifies the server of a vehicle-side verification result after the verification is completed. The specific process of performing the validity verification on the Bluetooth digital key 1 by the SDK module of Vehicle a is implemented using existing technologies.

Once the server determines that both Vehicle a and Phone A have successfully verified the Bluetooth digital key 1, it sends a trigger message to Phone A. The automaker APP in Phone A prompts that the provisioning of the vehicle key is successful, stores the Bluetooth Pairing Information 1 in a BLE master module; meanwhile, the server stores the Bluetooth digital key 1 in an SE (Security Element, Security Element) module of Phone A. At the same time, the server determines that the Bluetooth digital key 1 is the first one of Bluetooth digital keys for Vehicle a, and sends a control command for Bluetooth broadcast switching to Vehicle a, said command being encrypted with the MAC algorithm. After Vehicle a decrypts the Bluetooth broadcast switching command using the MAC algorithm, the SDK module of Vehicle a performs digital key protocol switching (including switching of broadcasting types) according to the digital key protocol supported by Phone B and carried in the Bluetooth broadcast switching command. After Vehicle a performs the digital key protocol switching based on the digital key protocol supported by Phone B and the operating system of the vehicle, the SDK module of Vehicle a stores the Bluetooth pairing information 1 to the BLE slave module and stores the Bluetooth digital key 1 to the SE module of the vehicle. That is, the following operations are executed at this time: sending the generated first Bluetooth digital key and the generated first Bluetooth pairing information that are based on the first protocol to the first terminal and the vehicle, so that the first terminal and the vehicle perform validity verification on the first Bluetooth digital key;
when it is identified that both the first terminal and the vehicle have completed the validity verification of the first Bluetooth digital key, triggering the first terminal to store the first Bluetooth digital key and the first Bluetooth pairing information, and triggering the vehicle to first perform digital key protocol and broadcast type switching according to the first protocol, and then store the first Bluetooth digital key and the first Bluetooth pairing information.

In addition, if the server determines that not both Vehicle a and Phone A have successfully verified the Bluetooth digital key 1, it triggers the automaker APP in Phone A to prompt that the provisioning of the vehicle key fails.

Thus, through the above steps, the creation of the first one of the Bluetooth digital keys (corresponding to the aforementioned Bluetooth digital key 1) between Phone A and Vehicle a is achieved. The automaker application (Automaker APP) in Phone A can use the Bluetooth digital key 1 to call the BLE master module to perform Bluetooth communication with the BLE slave module of Vehicle a. A vehicle control module of Vehicle a receives, through the SDK module, Bluetooth-based control commands transmitted by Phone A, thereby enabling the control of Vehicle A.

When the vehicle owner uses Phone B, which supports a different broadcasting type from the aforementioned Phone A (e.g., Phone B is a specially customized phone according to the requirements of the automaker, the specially customized phone supports the ICCE protocol but supports the static address broadcast; therefore, Phone B represents the second terminal in the second embodiment), to create a digital Bluetooth digital key 2 with Vehicle a, the processing procedure among the server, Vehicle a, and Phone B is almost identical to the creation process of the aforementioned Bluetooth digital key 1. The differences are as follows: 1) since the broadcast type of Phone B is different from the broadcast type of Phone A, the Bluetooth digital key 2 and Bluetooth pairing information 2 generated by the server are generated based on the private protocol specified by the automaker, while the supported broadcasting type is the same as the broadcasting type supported by the Bluetooth digital key 1; 2) after it determines that both Vehicle a and Phone B have successfully verified the Bluetooth digital key 2, the server determines that the Bluetooth digital key 2 is not the first one of the Bluetooth digital keys for Vehicle a, and triggers Vehicle a to perform protocol switching according to the private protocol (without changing the broadcasting type). Vehicle a then stores the Bluetooth pairing information 2 and stores the Bluetooth digital key 2 to the SE module. The automaker application in Phone B can use the Bluetooth digital key 2 to call the BLE master module to perform Bluetooth communication with the BLE slave module of Vehicle a. The vehicle control module of Vehicle a receives, through the SDK module, Bluetooth-based control commands transmitted by Phone B, thereby enabling the control of Vehicle a. That is, the following operations are executed at this time:
sending the generated second Bluetooth digital key and second Bluetooth pairing information that are based on the first protocol to the second terminal and the vehicle, so that the second terminal and the vehicle perform validity verification on the second Bluetooth digital key;
when it is identified that both the second terminal and the vehicle have completed the validity verification of the second Bluetooth digital key, triggering the second terminal to store the second Bluetooth digital key and the second Bluetooth pairing information; and triggering the vehicle to store the second Bluetooth digital key and the second Bluetooth pairing information.

When the vehicle owner uses Phone C, which supports a same broadcast type as the aforementioned Phone A, but a different digital key protocol from the aforementioned Phone A (e.g., a certain brand phone, in this case, the broadcast type supported by the operating system of the Phone B is the same as the broadcast type supported by the operating system of Phone A, but the digital key protocol supported by the operating system of the Phone C is different from the digital key protocol supported by the operating system of the Phone A. Therefore, Phone C represents the third terminal in the second embodiment), to create a digital Bluetooth digital key 3 with Vehicle a, the processing procedure among the server, Vehicle a, and Phone C is almost identical to the aforementioned creation process of the Bluetooth digital key 1. The differences are as follows: 1) the created Bluetooth digital key 3 and Bluetooth pairing information 3 are generated based on a digital key protocol (the ICCOA protocol) supported by both the operating system of Phone C and the communication system of the vehicle, while the supported broadcasting type is the same as the broadcasting type supported by Phone A; 2) after it determines that both Vehicle a and Phone C have successfully verified the Bluetooth digital key 3, the server determines that the Bluetooth digital key 3 is not the first one of Bluetooth digital keys for Vehicle a, and triggers Vehicle a to perform protocol switching according to the digital key protocol (ICCOA protocol) supported by both the operating system of Phone C and the communication system of the vehicle (without changing the broadcasting type). Vehicle a then stores the Bluetooth pairing information 3 and stores the Bluetooth digital key 3 to the SE module. The native application (Native APP) in Phone C can use the Bluetooth digital key 3 to call the BLE master module to perform Bluetooth communication with the BLE slave module of Vehicle a. The vehicle control module of Vehicle a receives, through the SDK module, Bluetooth-based control commands transmitted by Phone B, thereby enabling the control of Vehicle a. That is, the following operations are executed at this time:
sending the generated third Bluetooth digital key and the generated third Bluetooth pairing information that are based on the second protocol to the third terminal and the vehicle, so that the third terminal and the vehicle perform validity verification on the third Bluetooth digital key; when it is identified that both the third terminal and the vehicle have completed the validity verification of the third Bluetooth digital key, triggering the third terminal to store the third Bluetooth digital key and the third Bluetooth pairing information that are based on the second protocol; and triggering the vehicle to first perform the digital key protocol switching according to the second protocol, then store the third Bluetooth digital key and the third Bluetooth pairing information that are based on the second protocol.

Thus, based on the above process, a creation progression from the first one of the Bluetooth digital keys to additional Bluetooth digital keys for Vehicle a is achieved. For the Bluetooth chip of Vehicle a, when it sends out broadcasts, it always sends broadcasts as RPA broadcasts, so it can remain in low-power operation while enabling Bluetooth communication with multi-brand phones that support different digital key protocols.

Since using the automaker APP to control the vehicle side carries a risk that the operating system of the terminal may block it and thereby prevent vehicle control, in practical use, when the first one of the Bluetooth digital keys between the terminal and the vehicle is established, this first one of the Bluetooth digital keys is created with priority based on the public digital key protocol supported by both the operating system of the terminal and the communication system of the vehicle (i.e., using the mode in the first embodiment with priority), so that the terminal use the native application of the operating system to achieve the control of the vehicle; as native applications are not subject to being blocked by the operating system, the aforementioned risk can be completely avoided.

In the second embodiment of the present invention, with reference to FIG. 3, the vehicle owner can also share a vehicle key link from a terminal of the vehicle owner (which can be the aforementioned first terminal, the second terminal or the third terminal) to a terminal of his friend (which is referred to as the fourth terminal in the second embodiment of the present invention), so that the Bluetooth digital key is created between the fourth terminal and the vehicle, enabling the vehicle owner's friend to control the vehicle via the fourth terminal. Taking the vehicle owner sharing the vehicle key link from the aforementioned Phone A to his friend's Phone D (i.e., the aforementioned fourth terminal) as an example: after Phone D receives the vehicle key link, the friend clicks on the vehicle key link to establish a secure connection between Phone D and the server, at this point, the server establishes an association between Phone D and Vehicle a. Then, the friend sends a share-request provisioning command (which includes the brand and the model of Phone D) to the server via Phone D. After receiving the share-request provisioning command from Phone D, the server performs the creation process of the Bluetooth digital key 4 between Phone D and Vehicle a. The specific creation process follows the same steps as the creation process of the Bluetooth digital key between Vehicle a and either Phone B or Phone C, according to whether the broadcast types and the digital key protocols supported by the operating system of Phone D and the very first Bluetooth digital key of Vehicle a (here referring to the Bluetooth digital key 1 between Phone A and Vehicle a) are the same. The broadcast type supported by the created Bluetooth digital key 4 is the same as the broadcast type supported by the first one of the Bluetooth digital keys. That is, the following operations are executed at this time:
in response to a fourth event in which a friend of the vehicle owner creates a fourth Bluetooth digital key between a fourth terminal and the vehicle via a sharing link from a terminal of the vehicle owner;
if a broadcast type supported by an operating system of the fourth terminal is different from a broadcast type of a first one of Bluetooth digital keys of the vehicle, generating the fourth Bluetooth digital key and fourth Bluetooth pairing information that are based on the first protocol to complete creation of the fourth Bluetooth digital key between the fourth terminal and the vehicle;
if the broadcast type supported by the operating system of the fourth terminal is the same as the broadcast type of the first one of the Bluetooth digital keys of the vehicle, and a digital key protocol supported by the operating system of the fourth terminal is not supported by the communication system of the vehicle, then generating the fourth Bluetooth digital key and the fourth Bluetooth pairing information that are based on the first protocol to complete the creation of the fourth Bluetooth digital key between the fourth terminal and the vehicle;
if the broadcast type supported by the operating system of the fourth terminal is the same as the broadcast type of the first one of the Bluetooth digital keys of the vehicle, and the digital key protocol supported by the operating system of the fourth terminal is supported by the communication system of the vehicle, then generating a fourth Bluetooth digital key and fourth Bluetooth pairing information that are based on a third protocol to complete the creation of the fourth Bluetooth digital key between the fourth terminal and the vehicle, where the third protocol refers to a public digital key protocol supported by both the operating system of the fourth terminal and the communication system of the vehicle;
where the broadcast type supported by the fourth Bluetooth digital key is the same as the broadcast type supported by the first one of the Bluetooth digital keys;
where the terminal of the vehicle owner is the first terminal, the second terminal or the third terminal that has established an association with the vehicle on the server in advance.

It is considered that there is a vehicle owner change scenario, in some embodiments of the present invention, a mechanism for handling the created Bluetooth digital keys after the vehicle owner change is further provided. After the new vehicle owner has completed the registration successfully, the server immediately deletes all Bluetooth digital keys created by the original vehicle owner and shared with friends. The new vehicle owner then creates the Bluetooth digital key, and as the vehicle owner, shares the Bluetooth digital key, following the same operation manner as described in the aforementioned embodiments.

In the aforementioned embodiments of the present invention, based on the current vehicle Bluetooth chips that do not support sending two types of broadcasts simultaneously, the collaboration among the vehicle side, a cloud side, and the phone side is utilized to solve the problem of low power consumption and coexistence of multiple protocols for the vehicle-side Bluetooth digital keys. This ensures diversification of user vehicle keys while also ensuring low power consumption, stability, and security on the vehicle side.

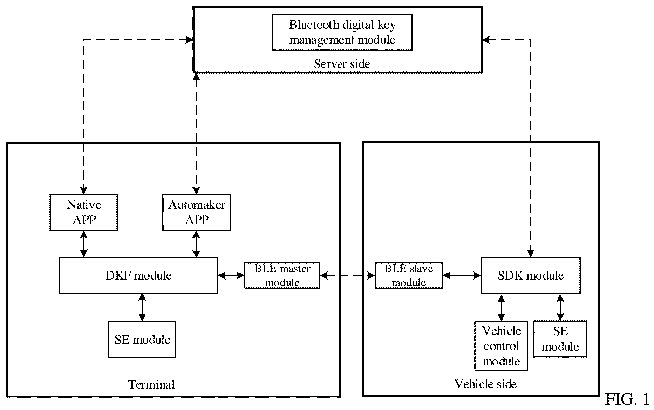

In each of the aforementioned embodiments of the present invention, as shown in FIG. 1, a physical system required to implement the above Bluetooth digital key creation includes:
Vehicle side: which is configured as a Bluetooth slave node, it is responsible for broadcasting, differentiating protocol, and receiving and executing RKE operations of different protocols from the phone side. It includes: a vehicle side SDK, a vehicle control module, an SE module, and a BLE slave module. The vehicle-side SDK module is configured to differentiate protocols and implement connection and authentication of the Bluetooth digital keys. The digital key protocols include ICCE, ICCOA, CCC, and the private protocol of the vehicle manufacturer. The vehicle control module is configured to execute the RKE function from the phone side. The SE module is configured to store the Bluetooth digital keys and implement key encryption and decryption algorithms. The BLE slave module is configured for Bluetooth communication and broadcasting with the phone side.

Phone side: which is configured as a Bluetooth master node, it is responsible for discovering and connecting to the vehicle-side Bluetooth, and sending RKE commands. It includes: Native APP, Automaker APP, Phone DKF, an SE module, and a BLE master module. The Native APP (the native application of a mobile terminal) is a system APP pre-installed by a phone manufacturer, and is configured to support the protocols supported by each phone. For example, some phones support ICCOA, some phones support CCC, and some phones support ICCE. The Automaker APP is configured to support the private protocol of the vehicle manufacturer. The Phone DKF is configured to support the connection and authentication functions of Bluetooth digital keys. The SE module is configured to store the Bluetooth digital keys and implement key encryption and decryption algorithms. The BLE master module is configured for Bluetooth communication with the vehicle side.

Server side: it includes a Bluetooth digital key management module, and is configured to manage the Bluetooth digital keys and the distribution and management of shared keys.

Some embodiments of the present invention further provide an apparatus for creating a Bluetooth digital key, which includes:
a first creating module, configured to, in response to a first event in which a vehicle owner creates a first Bluetooth digital key between a first terminal and a vehicle, generate the first Bluetooth digital key and first Bluetooth pairing information that are based on a first protocol to complete creation of the first Bluetooth digital key between the first terminal and the vehicle, where the first protocol refers to a public digital key protocol supported by both an operating system of the first terminal and a communication system of the vehicle;
a second creating module, configured to, in response to a second event in which the vehicle owner creates a second Bluetooth digital key between a second terminal and the vehicle, generate the second Bluetooth digital key and second Bluetooth pairing information that are based on a second protocol to complete creation of the second Bluetooth digital key between the second terminal and the vehicle, where the second protocol refers to a private digital key protocol specified by an automaker;
where a broadcast type supported by the operating system of the first terminal is different from a broadcast type supported by an operating system of the second terminal.

The apparatus in the embodiment corresponds to the method in the aforementioned first embodiment. It achieves relevant objectives by following the method description in the first embodiment and can attain the same technical effects as the aforementioned method.

Some embodiments of the present invention further provide an apparatus for creating a Bluetooth digital key, which includes:
a first creating module, configured to, in response to a first event in which a vehicle owner creates a first Bluetooth digital key between a first terminal and a vehicle, generate the first Bluetooth digital key and first Bluetooth pairing information that are based on a first protocol to complete creation of the first Bluetooth digital key between the first terminal and the vehicle, where the first protocol refers to a private digital key protocol specified by an automaker to which the vehicle belongs;
a second creating module, configured to, in response to a second event in which the vehicle owner creates a second Bluetooth digital key between a second terminal and the vehicle, generate the second Bluetooth digital key and second Bluetooth pairing information that are based on the first protocol to complete creation of the second Bluetooth digital key between the second terminal and the vehicle;
a third creating module, configured to, in response to a third event in which the vehicle owner creates a third Bluetooth digital key between a third terminal and the vehicle, generate the third Bluetooth digital key and the second Bluetooth pairing information that are based on a second protocol to complete creation of the third Bluetooth digital key between the third terminal and the vehicle, where the second protocol refers to a public digital key protocol supported by both an operating system of the third terminal and a communication system of the vehicle;
where a broadcast type supported by an operating system of the first terminal is different from a broadcast type supported by an operating system of the second terminal; and the operating system of the third terminal and the operating system of the first terminal support the same broadcast type but different digital key protocols;
where the first Bluetooth digital key, the second Bluetooth digital key and the third Bluetooth digital key support the same broadcast type.

The apparatus in the embodiment corresponds to the method in the aforementioned second embodiment. It achieves relevant objectives by following the method description in the second embodiment and can attain the same technical effects as the aforementioned method.

Some embodiments of the present invention further provide an apparatus for creating a Bluetooth digital key, which includes:
a processor;
a memory, configured to store an instruction executable by the processor;
where the processor is configured to perform the steps of the method for creating the Bluetooth digital key in the aforementioned first embodiment and second embodiment.

Some embodiments of the present invention further provide a computer-readable storage medium storing a computer program instruction thereon. When the program instruction is executed by a processor, the steps of the method for creating the Bluetooth digital key in the aforementioned first embodiment and second embodiment are implemented.

It should be noted that various embodiments in the present specification are described in a progressive manner. Each embodiment focuses on the differences from other embodiments, and the same or similar parts between the various embodiments can be referred to each other.

Although preferred embodiments of the embodiments of the present invention have been described, the person skilled in the art can make additional changes and modifications to these embodiments once they learn the basic creative concept. Therefore, the appended claims are intended to be interpreted as including the preferred embodiments and all changes and modifications that fall within the scope of the embodiments of the present invention.

It should also be noted that in the present document, terms such as "center", "upper", "lower", "left", "right", "vertical", "horizontal", "inner", "outer" and so on indicate orientations or positional relationships based on the orientations or positional relationships shown in the accompanying drawings. These are for the convenience of describing the present invention and simplifying the description, rather than indicating or implying that the device or element referred to must have a specific orientation, be constructed and operated in a specific orientation. In addition, it cannot be understood as a limitation on the present invention. In addition, relational terms such as "first" and "second" and so on are used to distinguish one entity or operation from another entity or operation, and do not necessarily require or imply that there is any such actual relationship or order between these entities or operations, nor can they be understood as indicating or implying relative importance. Furthermore, the terms "include", "comprise" or any other variants thereof are intended to cover non-exclusive inclusion, so that a process, method, article or terminal device including a series of elements not only includes those elements, but also includes other elements not explicitly listed, or elements inherent to such a process, method, article or terminal device. Without more restrictions, an element defined by the phrase "including a..." does not exclude the existence of additional identical elements in the process, method, article or terminal device that includes the element.

The technical solutions provided by the present invention have been introduced in detail above. The specific examples are used in the present document to explain the principles and implementations of the present invention. The descriptions of the above embodiments are only used to help understand the present invention, and the content of the present specification should not be understood as a limitation on the present invention. At the same time, for the person skilled in the art, based on the present invention, there will be modifications to the specific implementation and to application scopes, taking different forms. It is unnecessary and impossible to enumerate all implementations here, and the obvious changes or modifications derived therefrom still fall within the protection scope of the present invention.

## Claims

1. A method for creating a Bluetooth digital key, comprising:
in response to a first event in which a vehicle owner creates a first Bluetooth digital key between a first terminal and a vehicle, generating the first Bluetooth digital key and first Bluetooth pairing information that are based on a first protocol to complete creation of the first Bluetooth digital key between the first terminal and the vehicle, wherein the first protocol is a public digital key protocol supported by both an operating system of the first terminal and a communication system of the vehicle;
in response to a second event in which the vehicle owner creates a second Bluetooth digital key between a second terminal and the vehicle, generating the second Bluetooth digital key and second Bluetooth pairing information that are based on a second protocol to complete creation of the second Bluetooth digital key between the second terminal and the vehicle, wherein the second protocol is a private digital key protocol specified by an automaker;
wherein a broadcast type supported by the operating system of the first terminal is different from a broadcast type supported by an operating system of the second terminal;
wherein a broadcast type supported by the first Bluetooth digital key is the same as a broadcast type supported by the second Bluetooth digital key.

2. The method for creating a Bluetooth digital key according to claim 1, wherein first occurrence time of the creation of the first Bluetooth digital key based on the first event is earlier than first occurrence time of the creation of the second Bluetooth digital key based on the second event.

3. The method for creating a Bluetooth digital key according to claim 2, wherein a step of in response to the first event in which the vehicle owner creates the first Bluetooth digital key between the first terminal and the vehicle, generating the first Bluetooth digital key and the first Bluetooth pairing information that are based on the first protocol to complete the creation of the first Bluetooth digital key between the first terminal and the vehicle, comprises:
sending the generated first Bluetooth digital key and the generated first Bluetooth pairing information that are based on the first protocol to the first terminal and the vehicle, respectively, so that the first terminal and the vehicle perform validity verification on the first Bluetooth digital key;
when it is identified that both the first terminal and the vehicle have completed the validity verification of the first Bluetooth digital key, triggering the first terminal to store the first Bluetooth digital key and the first Bluetooth pairing information, and determining whether it is a first one of Bluetooth digital keys that is created for the vehicle for the first time;
if it is the first one of the Bluetooth digital keys that is created for the vehicle for the first time, triggering the vehicle to first perform digital key protocol and broadcast type switching according to the first protocol, and then store the first Bluetooth digital key and the first Bluetooth pairing information;
if it is not the first one of the Bluetooth digital keys that is created for the vehicle for the first time, and when the first protocol is the same as a broadcast type supported by the first one of the digital Bluetooth digital keys, triggering the vehicle to first perform digital key protocol switching according to the first protocol, and then store the first Bluetooth digital key and the first Bluetooth pairing information.

4. The method for creating a Bluetooth digital key according to claim 2 or 3, wherein a step of in response to the second event in which the vehicle owner creates the second Bluetooth digital key between the second terminal and the vehicle, generating the second Bluetooth digital key and the second Bluetooth pairing information that are based on the second protocol to complete the creation of the second Bluetooth digital key between the second terminal and the vehicle, comprises:
sending the generated second Bluetooth digital key and the generated second Bluetooth pairing information that are based on the second protocol to the second terminal and the vehicle, respectively, so that the second terminal and the vehicle perform validity verification on the second Bluetooth digital key;
when it is identified that both the second terminal and the vehicle have completed the validity verification of the second Bluetooth digital key, triggering the second terminal to store the second Bluetooth digital key and the second Bluetooth pairing information; and triggering the vehicle to first perform digital key protocol switching according to the second protocol, then store the second Bluetooth digital key and the second Bluetooth pairing information.

5. The method for creating a Bluetooth digital key according to claim 1, further comprising:
in response to a third event in which a friend of the vehicle owner creates a third Bluetooth digital key between a third terminal and the vehicle via a sharing link from a terminal of the vehicle owner;
if a broadcast type supported by an operating system of the third terminal is different from a broadcast type of a first one of Bluetooth digital keys of the vehicle, generating the third Bluetooth digital key and third Bluetooth pairing information that are based on the second protocol to complete creation of the third Bluetooth digital key between the third terminal and the vehicle;
if the broadcast type supported by the operating system of the third terminal is the same as the broadcast type of the first one of the Bluetooth digital keys of the vehicle, and a digital key protocol supported by the operating system of the third terminal is not supported by the communication system of the vehicle, then generating the third Bluetooth digital key and the third Bluetooth pairing information that are based on the second protocol to complete the creation of the third Bluetooth digital key between the third terminal and the vehicle;
if the broadcast type supported by the operating system of the third terminal is the same as the broadcast type of the first one of the Bluetooth digital keys of the vehicle, and the digital key protocol supported by the operating system of the third terminal is supported by the communication system of the vehicle, then generating a third Bluetooth digital key and third Bluetooth pairing information that are based on a third protocol to complete the creation of the third Bluetooth digital key between the third terminal and the vehicle, wherein the third protocol is a public digital key protocol supported by both the operating system of the third terminal and the communication system of the vehicle;
wherein a broadcast type supported by the third Bluetooth digital key is the same as the broadcast type supported by the first one of the Bluetooth digital keys;
wherein the terminal of the vehicle owner is the first terminal or the second terminal that has established an association with the vehicle on a server in advance.

6. The method for creating a Bluetooth digital key according to claim 1, further comprising:
when a change of the vehicle owner is identified, deleting all Bluetooth digital keys created in the past.

7. A method for creating a Bluetooth digital key, comprising:
in response to a first event in which a vehicle owner creates a first Bluetooth digital key between a first terminal and a vehicle, generating the first Bluetooth digital key and first Bluetooth pairing information that are based on a first protocol to complete creation of the first Bluetooth digital key between the first terminal and the vehicle, wherein the first protocol is a private digital key protocol specified by an automaker to which the vehicle belongs;
in response to a second event in which the vehicle owner creates a second Bluetooth digital key between a second terminal and the vehicle, generating the second Bluetooth digital key and second Bluetooth pairing information that are based on the first protocol to complete creation of the second Bluetooth digital key between the second terminal and the vehicle;
in response to a third event in which the vehicle owner creates a third Bluetooth digital key between a third terminal and the vehicle, generating the third Bluetooth digital key and the second Bluetooth pairing information that are based on a second protocol to complete creation of the third Bluetooth digital key between the third terminal and the vehicle, wherein the second protocol is a public digital key protocol supported by both an operating system of the third terminal and a communication system of the vehicle;
wherein a broadcast type supported by an operating system of the first terminal is different from a broadcast type supported by an operating system of the second terminal; and the operating system of the third terminal and the operating system of the first terminal support the same broadcast type but different digital key protocols;
wherein the first Bluetooth digital key, the second Bluetooth digital key and the third Bluetooth digital key support the same broadcast type.

8. The method for creating a Bluetooth digital key according to claim 7, wherein first occurrence time of the creation of the first Bluetooth digital key based on the first event is earlier than first occurrence time of the creation of the second Bluetooth digital key based on the second and first occurrence time of the creation of the third Bluetooth digital key based on the third event.

9. The method for creating a Bluetooth digital key according to claim 8, wherein a step of in response to the first event in which the vehicle owner creates the first Bluetooth digital key between the first terminal and the vehicle, generating the first Bluetooth digital key and the first Bluetooth pairing information that are based on the first protocol to complete the creation of the first Bluetooth digital key between the first terminal and the vehicle, comprises:
sending the generated first Bluetooth digital key and the generated first Bluetooth pairing information that are based on the first protocol to the first terminal and the vehicle, respectively, so that the first terminal and the vehicle perform validity verification on the first Bluetooth digital key;
when it is identified that both the first terminal and the vehicle have completed the validity verification of the first Bluetooth digital key, triggering the first terminal to store the first Bluetooth digital key and the first Bluetooth pairing information, and triggering the vehicle to first perform digital key protocol and broadcast type switching according to the first protocol, and then store the first Bluetooth digital key and the first Bluetooth pairing information.

10. The method for creating a Bluetooth digital key according to claim 8 or 9, wherein a step of in response to the second event in which the vehicle owner creates the second Bluetooth digital key between the second terminal and the vehicle, generating the second Bluetooth digital key and the second Bluetooth pairing information that are based on the first protocol to complete the creation of the second Bluetooth digital key between the second terminal and the vehicle, comprises:
sending the generated second Bluetooth digital key and the generated second Bluetooth pairing information that are based on the first protocol to the second terminal and the vehicle, respectively, so that the second terminal and the vehicle perform validity verification on the second Bluetooth digital key;
when it is identified that both the second terminal and the vehicle have completed the validity verification of the second Bluetooth digital key, triggering the second terminal to store the second Bluetooth digital key and the second Bluetooth pairing information; and triggering the vehicle to store the second Bluetooth digital key and the second Bluetooth pairing information.

11. The method for creating a Bluetooth digital key according to claim 10, wherein a step of in response to the third event in which the vehicle owner creates the third Bluetooth digital key between the third terminal and the vehicle, generating the third Bluetooth digital key and the second Bluetooth pairing information that are based on the second protocol to complete the creation of the third Bluetooth digital key between the third terminal and the vehicle, comprises:
sending the generated third Bluetooth digital key and the generated third Bluetooth pairing information that are based on the second protocol to the third terminal and the vehicle, respectively, so that the third terminal and the vehicle perform validity verification on the third Bluetooth digital key;
when it is identified that both the third terminal and the vehicle have completed the validity verification of the third Bluetooth digital key, triggering the third terminal to store the third Bluetooth digital key and the third Bluetooth pairing information that are based on the second protocol; and triggering the vehicle to first perform digital key protocol switching according to a public protocol, then store the third Bluetooth digital key and the third Bluetooth pairing information that are based on the second protocol.

12. The method for creating a Bluetooth digital key according to claim 7, further comprising:
in response to a fourth event in which a friend of the vehicle owner creates a fourth Bluetooth digital key between a fourth terminal and the vehicle via a sharing link from a terminal of the vehicle owner;
if a broadcast type supported by an operating system of the fourth terminal is different from a broadcast type of a first one of Bluetooth digital keys of the vehicle, generating the fourth Bluetooth digital key and fourth Bluetooth pairing information that are based on the first protocol to complete creation of the fourth Bluetooth digital key between the fourth terminal and the vehicle;
if the broadcast type supported by the operating system of the fourth terminal is the same as the broadcast type of the first one of the Bluetooth digital keys of the vehicle, and a digital key protocol supported by the operating system of the fourth terminal is not supported by the communication system of the vehicle, then generating the fourth Bluetooth digital key and the fourth Bluetooth pairing information that are based on the first protocol to complete the creation of the fourth Bluetooth digital key between the fourth terminal and the vehicle;
if the broadcast type supported by the operating system of the fourth terminal is the same as the broadcast type of the first one of the Bluetooth digital keys of the vehicle, and the digital key protocol supported by the operating system of the fourth terminal is supported by the communication system of the vehicle, then generating a fourth Bluetooth digital key and fourth Bluetooth pairing information that are based on a third protocol to complete the creation of the fourth Bluetooth digital key between the fourth terminal and the vehicle, wherein the third protocol is a public digital key protocol supported by both the operating system of the fourth terminal and the communication system of the vehicle;
wherein a broadcast type supported by the fourth Bluetooth digital key is the same as the broadcast type supported by the first one of the Bluetooth digital keys;
wherein the terminal of the vehicle owner is the first terminal, the second terminal or the third terminal that has established an association with the vehicle on a server in advance.

13. The method for creating a Bluetooth digital key according to claim 7, further comprising:
when a change of the vehicle owner is identified, deleting all Bluetooth digital keys created in the past.

14. An apparatus for creating a Bluetooth digital key, comprising:
a first creating module, configured to, in response to a first event in which a vehicle owner creates a first Bluetooth digital key between a first terminal and a vehicle, generate the first Bluetooth digital key and first Bluetooth pairing information that are based on a first protocol to complete creation of the first Bluetooth digital key between the first terminal and the vehicle, wherein the first protocol is a public digital key protocol supported by both an operating system of the first terminal and a communication system of the vehicle;
a second creating module, configured to, in response to a second event in which the vehicle owner creates a second Bluetooth digital key between a second terminal and the vehicle, generate the second Bluetooth digital key and second Bluetooth pairing information that are based on a second protocol to complete creation of the second Bluetooth digital key between the second terminal and the vehicle, wherein the second protocol is a private digital key protocol specified by an automaker;
wherein a broadcast type supported by the operating system of the first terminal is different from a broadcast type supported by an operating system of the second terminal.

15. An apparatus for creating a Bluetooth digital key, comprising:
a first creating module, configured to, in response to a first event in which a vehicle owner creates a first Bluetooth digital key between a first terminal and a vehicle, generate the first Bluetooth digital key and first Bluetooth pairing information that are based on a first protocol to complete creation of the first Bluetooth digital key between the first terminal and the vehicle, wherein the first protocol is a private digital key protocol specified by an automaker to which the vehicle belongs;
a second creating module, configured to, in response to a second event in which the vehicle owner creates a second Bluetooth digital key between a second terminal and the vehicle, generate the second Bluetooth digital key and second Bluetooth pairing information that are based on the first protocol to complete creation of the second Bluetooth digital key between the second terminal and the vehicle;
a third creating module, configured to, in response to a third event in which the vehicle owner creates a third Bluetooth digital key between a third terminal and the vehicle, generate the third Bluetooth digital key and the second Bluetooth pairing information that are based on a second protocol to complete creation of the third Bluetooth digital key between the third terminal and the vehicle, wherein the second protocol is a public digital key protocol supported by both an operating system of the third terminal and a communication system of the vehicle;
wherein a broadcast type supported by an operating system of the first terminal is different from a broadcast type supported by an operating system of the second terminal; and the operating system of the third terminal and the operating system of the first terminal support the same broadcast type but different digital key protocols;
wherein the first Bluetooth digital key, the second Bluetooth digital key and the third Bluetooth digital key support the same broadcast type.

16. An apparatus for creating a Bluetooth digital key, comprising:
a processor;
a memory, configured to store an instruction executable by the processor;
wherein the processor is configured to perform the steps of the method for creating a Bluetooth digital key according to any one of claims 1 to 6 or the steps of the method for creating a Bluetooth digital key according to any one of claims 7 to 13.

17. A computer-readable storage medium storing a computer program instruction thereon, wherein when the program instruction is executed by a processor, the steps of the method for creating a Bluetooth digital key according to any one of claims 1 to 6 or the steps of the method for creating a Bluetooth digital key according to any one of claims 7 to 13 are implemented.
